# EUROPEAN PATENT APPLICATION

(11) **EP 2 587 479 A1**
(43) Date of publication of application: **01.05.2013**
(21) Application number: 12181732.4
(22) Date of filing: 24.08.2012
(51) Int. Cl.: G10L 15/26

(54) **Electronic Device and Control Method Thereof**

(30) Priority: 26.10.2011 KR 20110109694
(71) Applicant: Samsung Electronics Co., Ltd., Suwon-si, Gyeonggi-do, 443-742 (KR)
(72) Inventor: Bak, Eun-sang, Gyeonggi-do (KR); Chae, Ju-rack, Gyeonggi-do (KR); Kim, Jae-hwan, Gyeonggi-do (KR); Liu, Yu, Gyeonggi-do (KR)
(74) Representative: Hewett, Jonathan Michael Richard

(57) **Abstract**

An electronic device and a control method are provided. The electronic device includes a voice receiver which receives a voice of a user; a signal processor which performs signal processing on the received voice; a communicator which communicates with a first external device; and a controller which determines text corresponding to the received voice of the user, and controls the communicator to transmit the signal processed voice and the determined text to the first external device.

## Description

The present invention relates to an electronic device with communication capability, and a control method thereof.

With recent advances in portable communication devices, various kinds of communication capabilities including voice call, text call and video call have been popular. However, such various kinds of communication capabilities have been insignificantly utilized in home electronic devices such as televisions (TVs) and so on, although they have been significantly activated in portable communication devices.

For example, if a user wishes to send text or leave a text message, the user has to input the text using an input device such as a keyboard or the like. This may be possible in environments providing proper input devices. However, most home video display devices have no proper input device or, if any, it is inconvenient for user to input texts, which results in difficulty in implementation of various kinds of communication capabilities.

An aspect of the present invention provides an electronic device allowing use of various kinds of communication capabilities with more convenience, and a control method thereof.

According to an aspect of an exemplary embodiment of the present invention, there is provided an electronic device including: a voice input unit which receives a voice of a user; a signal processing unit which performs a signal process on the received voice; a communication unit which communicates with a first external device; and a control unit which determines a text corresponding to the received voice and controls the communication unit to transmit the signal processed voice and the determined text to the first external device.

The voice input unit may receive the voice from a remote controller that provides remote control of the electronic device.

The signal processing unit may perform a pre-process to remove noise included in the received voice.

The voice input unit may receive the voice from a second external device.

The electronic device may further include a voice recognition unit that recognizes the received voice, and the control unit may determine the text using the voice recognition unit.

The communication unit may communicate with an external server, and the control unit may transmit the received voice to the external server, receive information about the transmitted voice from the external server, and determine the text based on the received information.

The electronic device may further include a display unit that displays the text.

The control unit may display the text on the display unit before transmitting the text and correct the text according to an instruction.

According to an aspect of another exemplary embodiment, there is provided a control method of an electronic device, including receiving a voice of a user; performing a signal process on the received voice; determining a text corresponding to the received voice; and transmitting the signal processed voice and the determined text to a first external device.

The receiving the voice of the user may include receiving the voice from a remote controller that provides remote control of the electronic device.

The performing a signal process may include performing a pre-process to remove noise included in the received voice.

The receiving the voice from the user may include receiving the voice from a second external device.

The determining the text may include recognizing the received voice; and determining the text based on a result of the recognition.

The determining a text may include transmitting the received voice to an external server; receiving information about the transmitted voice from the external server; and determining the text based on the received information.

The control method may further include outputting the processed voice through a voice output unit.

The control method may further include displaying the text on a display unit.

The displaying the text may include displaying the text on the display unit before transmitting the text, and the determining a text may include correcting the text according to an instruction.

The above and/or other aspects will become apparent and more readily appreciated from the following description of the exemplary embodiments, taken in conjunction with the accompanying drawings, in which:
FIG. 1 is a view showing environments to which an electronic device according to an exemplary embodiment is applied;
FIG. 2 is a block diagram showing an example of a configuration of the electronic device shown in FIG. 1;
FIG. 3 is flow chart showing a control method of the electronic device shown in FIGs. 1 and 2;
FIG. 4 is a flow chart showing operation of verification and correction of text in the method of FIG. 3; and
FIG. 5 shows one example of display of a candidate text in the operation of FIG. 4.

Below, exemplary embodiments will be described in detail with reference to accompanying drawings so as to be easily realized by a person having ordinary knowledge in the art.

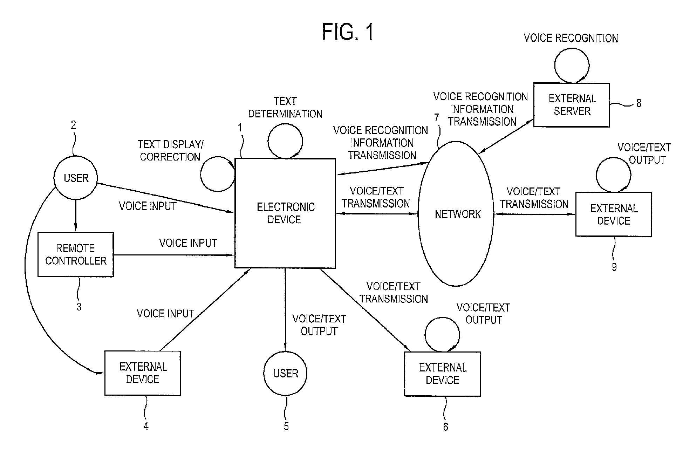

FIG. 1 is a view showing environments to which an electronic device according to an exemplary embodiment is applied. An electronic device 1 shown in FIG. 1 may be a home video display device such as a television (TV), an audio-video (AV) device or the like. The electronic device 1 provides user 2 and user 5 with various communication capabilities. For example, the electronic device 1 receives voice input from a user 2 and outputs corresponding voice and text. The voice and text may be output either immediately after receiving the voice or later. The user may input the voice to the electronic device 1 either directly or via a peripheral device such as a remote controller 3. Alternatively, the user may input the voice via a separate external device 4 such as a mobile phone, a smart phone, a voice recorder, or the like.

The electronic device 1 may output the voice and text to the same user 2 or a different user 5 or may transmit the voice and text to a local external device 6 or to a remote external device 9 via a network 7. The external devices 4, 6 and 9 may be devices of the same type or different types. The text output or transmitted along with the voice may be obtained through recognition of the received voice. The electronic device 1 may perform the voice recognition locally or may request a remote external server 8 for voice recognition via the network 7 and receive a result of the voice recognition from the remote external server 8. Before being output, the text may be verified and, in some cases, corrected by the users 2 and 5.

Thus, since the electronic device 1 of this exemplary embodiment can have the communication capability using voice rather than characters, there is no need for character input, thereby improving users' convenience. In addition, since the electronic device 1 of this exemplary embodiment delivers the voice along with the corresponding text, an effect of communication or information delivery can be maximized.

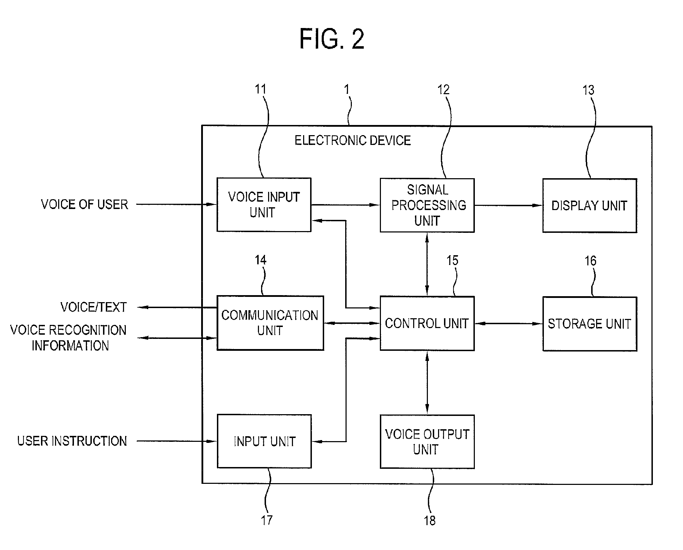

FIG. 2 is a block diagram showing configuration of the electronic device 1 shown in FIG. 1. As shown in FIG. 2, the electronic device 1 may include a voice input unit 11, a signal processing unit 12, a communication unit 14 and a control unit 15.

The voice input unit 11 receives a representation of the user's voice. The voice input unit 11 may include a microphone to generate a voice signal corresponding to the received voice of the user. As an alternative, the voice input unit 11 may include a remote controller receiving unit to receive a signal corresponding to the voice of the user from the remote controller 3. In this case, the remote controller 3 may include a microphone to generate a voice signal corresponding to the received voice of the user.

The signal processing unit 12 receives the voice signal corresponding to the user's voice from the voice input unit 11 and performs a voice process so that the received voice signal can be output. The signal processing unit 12 may further perform a pre-process to remove noise included in the voice signal. The signal processing unit 12 may selectively perform the pre-process under control of the control unit 15. For example, if a microphone is incorporated in the voice input unit 11, the signal processing unit 12 may perform the pre-process to improve quality of the voice signal which may include more noise than a microphone incorporated in the remote controller 3.

The signal processing unit 12 may further perform an image process so that an input image signal can be displayed. The electronic device 1 may further include a signal input unit (not shown) to input an image signal. The image signal input to the signal input unit may be broadcast and received from a broadcasting station (not shown), received from a local image display device (not shown) such as a digital video disc (DVD) player or the like, or received from the local external device 4 such as a mobile terminal. The electronic device 1 may further include a display unit 13 to display an image based on the image signal processed by the signal processing unit 12.

The communication unit 14 transmits voice and texts to the external devices 6 and 9 in communication therebetween. The communication unit 14 may be connected to the external device 6 either directly or via the network. Communication between the communication unit 14 and the external devices 6 and 9 is not particularly limited but may include either or both of wired and wireless communications.

The control unit 15 controls the entire operation of the electronic device 1. Upon receiving a user's voice through the voice input unit 11, the control unit 15 determines text corresponding to the received voice and controls the signal processing unit 12 and the communication unit 14 so that the voice and the text can be output. The electronic device 1 may further include a voice output unit 18 incorporating a speaker to output the voice, and the control unit 15 may control the voice output unit 18 to output the voice. In this case, in addition to the output of the voice, the control unit 15 may control the signal processing unit 12 to display the text corresponding to the voice on the display unit 13.

The control unit 15 determines an object to which the voice and the text are to be output depending on a selection of a function. The user may select the function, or a control signal may select the function. For example, if text sending menu is selected, the control unit 15 controls the communication unit 14 to transfer the voice and the text to an external device 6 or 9 that is designated. The external device 6 or 9 may be designated by the user using a selection screen. As another example, if a memo menu is selected, the control unit 15 stores the received voice and controls the voice output unit 18 and the display unit 13 to output the stored voice and the corresponding text. This function may be used when the user wishes to confirm a memo later. The electronic device 1 may further include a storage unit 16 including a nonvolatile memory for storing data of the received voice.

The electronic device 1 further includes an input unit 17 for receiving instructions. The input unit 17 may be provided in the form of an operation panel in a main body of the electronic device 1 for receiving inputs or may receive remote controller signals from the remote controller 3. The electronic device 1 may provide the display unit 13 with a user interface (UI) to allow the user to select a menu (or function) and may receive a menu selection from the UI.

Although not shown, the control unit 15 may include a nonvolatile memory in which control programs to enable the above-mentioned control operation are stored, a volatile memory in which at least some of the stored control programs are loaded, and a microprocessor to execute the loaded control programs.

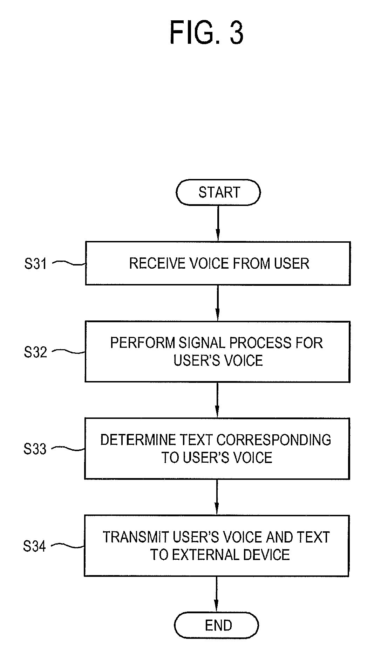

FIG. 3 is flow chart showing a control method according to an exemplary embodiment of the electronic device 1 shown in FIGS. 1 and 2. In operation S31, the electronic device 1 receives a voice input from a user. In operation S32**,** the electronic device 1 performs a signal process so that the received voice of the user can be output. In operation S33, the electronic device 1 determines text corresponding to the received voice of the user. In operation S34, the electronic device 1 transmits the user's voice and the determined text to the external devices 6 and 9. Alternatively, as described above, the electronic device 1 may output the user's voice and the determined text directly depending on a selection of a function.

In operation S33, the text is determined through recognition of the received voice. The electronic device 1 may include a voice recognition module (not shown) which may be implemented in software or hardware which is called a "voice recognition engine," and may determine text corresponding to the received voice using the voice recognition module. As an alternative, the electronic device 1 may determine text corresponding to the received voice using the external server 8 provided with a voice recognition engine. In this case, the electronic device 1 determines the text corresponding to the received voice by transmitting information on the received voice of the user to the external server 8 via the network 7 and receiving a result of voice recognition from the external server 8.

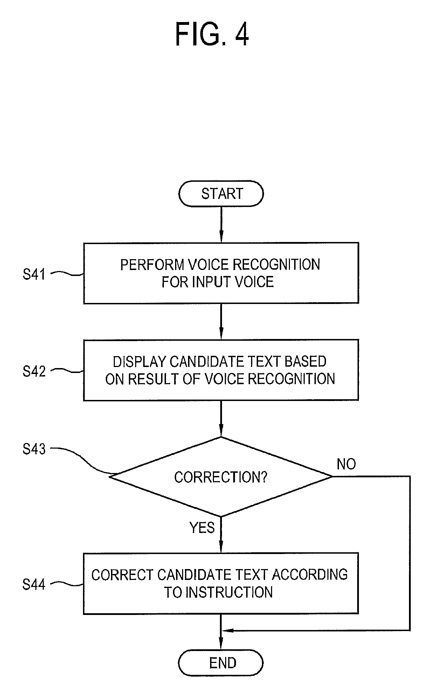

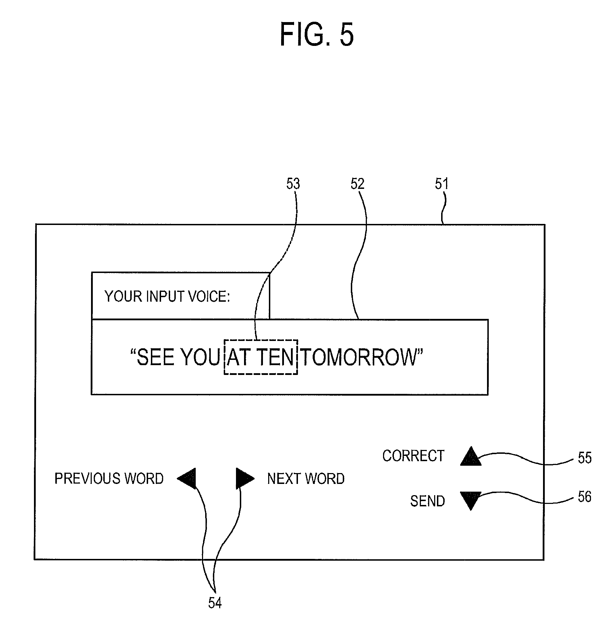

In determining the text corresponding to the received voice, the electronic device 1 may allow the user to verify and, in certain cases, correct the text. FIG. 4 is a flow chart showing operation of verification and correction of text according to an exemplary embodiment. In operation S41, the electronic device 1 performs voice recognition for a voice input. In operation S42, the electronic device 1 displays a candidate text based on a result of the voice recognition. FIG. 5 shows one example of display of a candidate text. In FIG. 5, reference numeral 51 denotes a screen of the display unit 13 and reference numeral 52 denotes a UI including text based on a result of recognition of the received voice. For example, the UI 52 shows text corresponding to a user's voice message, "See you at ten tomorrow." The user can check whether or not the user's voice is properly recognized while viewing the text shown in the UI 52.

In operation S43, the electronic device 1 determines whether there is a need to correct the candidate text. If it is determined that there is no need to correct the candidate text (NO in operation S43), the process ends. On the other hand, if it is determined that there is a need to correct the candidate text (YES in operation S43), the electronic device 1 corrects the candidate text according to an instruction in operation S44. The UI 52 may include items to allow for correction of the candidate text. For example, the UI 52 may include items 54 and 55 to allow the candidate text to be highlighted word by word (see reference numeral 53) and allow a word to be selected to be corrected in the candidate text. The user may select a word to be corrected in the candidate text using a directional button provided in the user input unit 17 or the remote controller 3. The candidate text may also be corrected using character keys provided in the user input unit 17 or the remote controller 3 or by inputting a voice again.

If the correction has been completed or there is no need of correction, the electronic device 1 determines the candidate text subjected to the verification and correction process as text to be output. The UI 52 may further include an item 56 to allow completion of the verification and correction to be selected.

According to exemplary embodiments, various kinds of communication capabilities can be used with more convenience by utilizing home electronic devices such as televisions (TVs) and the like.

Where otherwise not defined herein, the term "unit" means a hardware component, such as a processor or circuit, and/or a software component that is executed by a hardware component such as a processor.

Although a few exemplary embodiments have been shown and described, it will be appreciated by those skilled in the art that changes may be made in these exemplary embodiments without departing from the invention, the scope of which is defined in the appended claims.

## Claims

1. An electronic device comprising:
a voice input unit which receives a voice of a user;
a signal processing unit which performs signal processing on the received voice;
a communication unit which communicates with a first external device; and
a control unit which determines text corresponding to the received voice of the user, and controls the communication unit to transmit the signal processed voice and the determined text to the first external device.

2. The electronic device according to claim 1, wherein the voice input unit receives the voice from a remote controller that provides remote control of the electronic device.

3. The electronic device according to claim 2, wherein the signal processing unit performs a pre-process on the received voice to remove noise that is included in the received voice.

4. The electronic device according to one of claims 1 to 3, wherein the voice input unit receives the voice from a second external device.

5. The electronic device according to one of claims 1 to 4, further comprising a voice recognition unit that recognizes the received voice,
wherein the control unit determines the text corresponding to the received voice using the voice recognition unit.

6. The electronic device according to one of claims 1 to 5, wherein the communication unit communicates with an external server, and
wherein the control unit transmits the received voice to the external server, receives information about the transmitted voice from the external server, and determines the text based on the received information.

7. The electronic device according to one of claims 1 to 6, further comprising a voice output unit that outputs the signal processed voice.

8. The electronic device according to one of claims 1 to 7, wherein the control unit displays the text on the display unit before transmitting the text, and corrects the text according to an instruction.

9. A control method of an electronic device, the control method comprising:
receiving a voice of a user;
performing signal processing on the received voice;
determining text corresponding to the received voice; and
transmitting the signal processed voice and the determined text to a first external device.

10. The control method according to claim 9, wherein the receiving voice of the user comprises receiving the voice from a remote controller that provides remote control of the electronic device.

11. The control method according to claim 10, wherein the performing the signal processing comprises performing a pre-process to remove noise that is included in the received voice.

12. The control method according to one of claims 9 to 11, wherein the receiving voice of the user comprises receiving the voice from a second external device.

13. The control method according to one of claims 9 to 12, wherein the determination of text comprises:
recognizing the received voice; and
determining the text based on a result of the recognizing.

14. The control method according to one of claims 9 to 13, wherein the determination of text comprises:
transmitting the received voice to an external server;
receiving information about the transmitted voice from the external server; and
determining the text based on the received information.

15. The control method according to one of claims 9 to 14, wherein the displaying the text comprises displaying the text on the display unit before transmitting the text, and
wherein the determination of text comprises correcting the text according to an instruction.
